(19) Europäisches Patentamt
European Patent Office
Office européen des brevets

(11) **EP 2 469 471 B1**

(12) **EUROPEAN PATENT SPECIFICATION**

(45) Date of publication and mention
of the grant of the patent:
**21.08.2013 Bulletin 2013/34**

(51) Int Cl.:
***G06T 11/00*** *(2006.01)*

(21) Application number: **11193790.0**

(22) Date of filing: **15.12.2011**

(54) **Tomographic reconstruction of an object in motion**

Tomografische Rekonstruktion eines bewegten Objekts

Reconstruction tomographique d'un objet en mouvement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2010 FR 1061185**

(43) Date of publication of application:
**27.06.2012 Bulletin 2012/26**

(73) Proprietor: **General Electric Company
Schenectady, NY 12345 (US)**

(72) Inventors:
• **Langet, Helene
78533 Buc (FR)**
• **Riddel, Cyril
78533 Buc (FR)**

(74) Representative: **Bedford, Grant Richard et al
GPO Europe
GE International Inc.
The Ark
201 Talgarth Road
Hammersmith
London W6 8BJ (GB)**

(56) References cited:
**US-A1- 2009 161 932**

• **CHEN GUANG-HONG ET AL: "Prior image constrained compressed sensing (PICCS): A method to accurately reconstruct dynamic CT images from highly undersampled projection data sets", MEDICAL PHYSICS, AIP, MELVILLE, NY, US, vol. 35, no. 2, 28 January 2008 (2008-01-28), pages 660-663, XP012115917, ISSN: 0094-2405, DOI: DOI:10.1118/1.2836423**
• **MARK SUPANICH ET AL: "Radiation dose reduction in time-resolved CT angiography using highly constrained back projection reconstruction; Radiation dose reduction in time-resolved CTA using HYPR reconstruction", PHYSICS IN MEDICINE AND BIOLOGY, TAYLOR AND FRANCIS LTD. LONDON, GB, vol. 54, no. 14, 21 July 2009 (2009-07-21) , pages 4575-4593, XP020158912, ISSN: 0031-9155**

**Description**

General Technical Field

The invention relates to the field of tomographic reconstruction and more particularly to the reconstruction of a sequence of 3D image(s) describing an object to be imaged by means of a contrast product.

Prior Art

Tomography allows making images of slices of a region of interest of an object by acquiring projections.

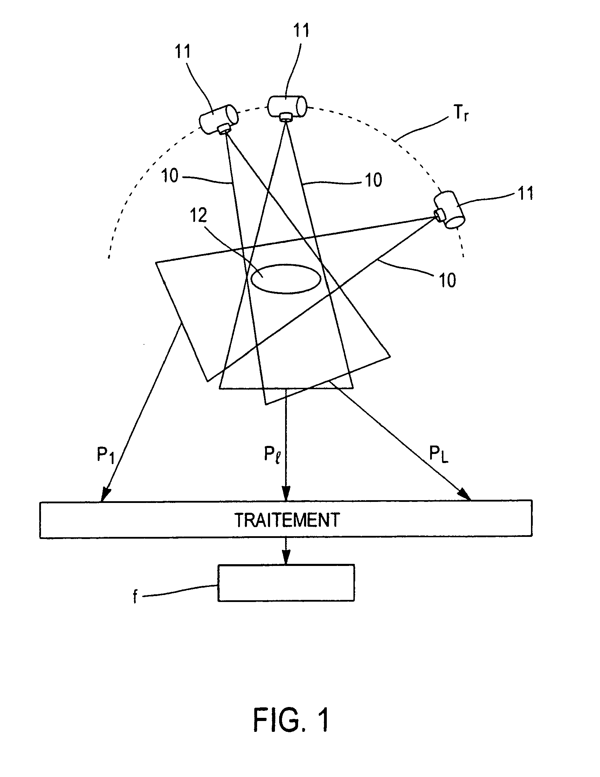

Figure 1 schematically illustrates the acquisition of 2D images of an organ and the tomographic reconstruction of a 3D image of this organ.

Reconstruction of a 3D image by tomography consists of emitting X-rays 10 coming from a source to the organ 12, the X-rays being emitted according to different angulations $l \in \{1,...,L\}$ which define the trajectory Tr of the source (commonly rotation, also known as spin).

After having passed through the organ 12, the X-rays 10 are detected by a detector 13 to form a set of 2D projections. There are as many 2D projections acquired as relevant angulations (or L projections for the trajectory). Acquisition is carried out by a detector (not shown) located opposite the source of X-rays 11, for example a digital camera.

US Patent Application Publication No. 2009/0161932 discloses a method for the reconstruction of sparse, angiographic images using the compressed sensing framework. US 2009/0161932 teaches to employ two sparsifying transforms, namely the subtraction of a prior image acquired without contrast agent followed by a gradient transform.

One application of the tomography is the detection and characterisation of a lesion in an organ, for example stenosis in a vessel of a patient.

The acquired 2D projections are used to reconstruct a 3D image of the object. This 3D image is more precisely a 3D map of the coefficients of attenuation to X-rays of the traversed medium.

Using this map, the radiological practitioner interprets this image as a function of the differences in contrast observed.

An iterative 3D reconstruction process is known. This process is based on a discrete and matricial expression of the problem of tomographic reconstruction.

Such a process is carried out in a processing unit of a medical imaging system.

More precisely, the problem is modelled by the following equation:

$$Rf = p$$

where $p$ is the set of $L$ projections acquired, $R$ is a projection operator which models the tomographic imaging system and its trajectory of acquisition of $L$ projections $p$, and $f$ is the 3D image of the object to be reconstructed.

The problem of tomographic reconstruction is determining $f$ by knowing $p$ and $R$.

A known solution to the equation mentioned hereinabove is the resolution of the following criterion:

$$\begin{cases} Q(g) = \dfrac{1}{2}\|Rg - p\|_2^2 \\ g^* = \arg\min_g Q(g) \end{cases}$$

where $\| \ \|_2$ symbolises the Euclidian standard said $L_2$.

Minimisation of the criterion $Q(g)$ relative to g gives good results ($g^* \approx f$) when the set of projections $p$ is such that $L$ is large (typically a few hundreds) and when the set of $L$ angulations covers at least 180° degrees. These conditions are commonly verified when the organ is static during the time necessary to effect a rotation of the imaging system.

A problem arises in getting an image of the blood vessels which do not show a marked difference in contrast relative to the surrounding tissue. It is therefore necessary to inject a so-called "contrast" product (for example an iodised product) into the vessels so as to make them more opaque to X-rays and allow them to be displayed as much in 2D projections as in associated 3D reconstructions. The image of the vessels alone is obtained by subtracted angiography where two acquisitions are made: one without contrast product, known as "mask" and noted $p_M$, and a second one, known as "opacified" and noted $p_O$, identical in terms of geometry, but after injection of the contrast product. The order in which these acquisitions are done does not matter. The image of the vessels in the images is obtained by opacified subtraction minus mask. Subtracted tomographic acquisition occurs therefore as the succession of two tomographic acquisitions, masked and opacified, such that an image of the acquisition mask (same geometry) allowing subtraction corresponds to each image of the opacified acquisition.

The 3D mask images, noted $f_M$, opacified, noted $f_o$, and subtracted, noted $f_s$, are respectively defined as the solutions to the problems $Rf_M = p_M$, $Rf_o = p_o$ and $Rf_s = p_o - p_M$. They are linked by the relationship $f_s = f_o - f_M$ and by the symbol $R$ common to all three problems, which translates the geometric identity of the spins and consequently the possibility of subtraction of data $p_o - p_M$.

The contrast product dilutes rapidly in the blood flow. The maximal rotation speed of the tomographic system is generally used to limit the volume of contrast product necessary for opacified acquisition. The angular sampling conditions of the tomography also involve obtaining a few hundreds of images by acquisition (commonly 600). Angiography systems are however limited in speed of rotation (commonly 40°/s) and in image rate (commonly 50 Hz) such that the total number of images acquired (for example 250) is sufficient for the display of strong contrasts (bones and opacified vessels) but insufficient for weak contrasts (soft tissue and perfused tissue). It is said that contrast resolution is limited by sampling. The 3D image subtracted from the contrast product alone (opacified vessels and perfused tissue) suffers under the same limitations of sampling, although it is the result of two acquisitions, simply because these two acquisitions reproduce the same limited sampling enabling subtraction of 2D projections instead of being complementary to enable an increase in contrast resolution.

Reference is now made to the general case where the acquisition mask is modelled by the operator $R_M$ and acquisition opacified by the operator $R_o$. The 3D images $f_M$ and $f_o$ are respectively defined by $R_M f_M = p_M$ and $R_o f_o = p_o$ and are linked by the relationship $f_s = f_o - f_M$. As the hypothesis $R_M = R_o$, is no longer necessarily done, the subtraction of data can no longer be written; generation of the subtracted 3D image no longer occurs except by subtraction of the opacified 3D image, reconstruction of opacified spin at rapid rotation (defined by $R_o$), and of the 3D image mask, reconstruction of a spin mask at rapid rotation, or even of any other spin enabling reconstruction of the object of interest without injection of contrast product (defined by $R_M$). In particular, spin at slower rotation will accumulate the number of projections necessary for detection of weak contrasts of soft tissue in the 3D image mask. This case corresponds however to an increase in the total number of projections acquired and therefore of the dose of X-rays associated with examination, without consequence for contrast resolution of the opacified 3D image which is not improved for perfused tissue.

The present invention consists of simultaneously using the two mask and opacified acquisitions to reconstruct the associated opacified and subtracted 3D mask images in order to reduce the number of projections necessary for detection of weak contrasts in the reconstructed 3D images. For this, it is based on temporal interpretation of acquisition with injection of contrast product in considering two temporal points: $t_o$ for the injection and $t_M$ for the mask. It hypothesises that the time changes caused by injection of contrast product are compressible. The time series to be reconstructed is therefore constituted by the vector $\vec{f} = \{f(t_o), f(t_M)\} = \{f_o, f_M\}$ for which a time transform $\vec{h} = H_t \vec{f} = \{h_\alpha, h_\delta\}$ can be defined where the constituents $h_\alpha$ and $h_\delta$ are 3D images and such that one at least of the constituents of $H_t \vec{f}$ is parsimonious.

This hypothesis proposes a method of reconstruction for compensating sub-sampling of variations linked to injection, and therefore more particularly improving reconstruction of the subtracted 3D image.

A corollary to the hypothesis of compressibility is that the parts not affected by the contrast product are redundant in the acquisitions, and must therefore be determined by the set of available data $\vec{p} = \{p(t_o), p(t_M)\} = \{p_o, p_M\}$

according to the relationship $R\vec{f} = \vec{p}$ with R diagonal operator by block, where each block of the diagonal models spin, or $R = diag\{R(t_M), R(t_o)\} = diag\{R_M, R_o\}$. So, without making a hypothesis of compressibility on the mask and opacified 3D images themselves, improved reconstruction of their common parts is obtained because of $H_t$. A novel consequence of this analysis is that it is then advantageous to take $R(t_M) \neq R(t_o)$ to make the two acquisitions as complementary as possible.

In particular, if $R(t_M)$ samples a circular trajectory with an angular pitch $\delta\theta$, and if $R(t_o)$ samples a circular trajectory with the angular same pitch $\delta\theta$, with this invention they will be offset by $\delta\theta/2$ so that the operator $R = diag\{R(t_o), R(t_M)\}$ corresponds to a sampling of a circular trajectory with an angular pitch of $\delta\theta/2$. It is evident that angular sampling for the same number of projections is doubled (and therefore the same dose of X-rays) relative to the common case where $R(t_M) = R(t_o)$.

Presentation of the Invention

An aim of the invention is to produce a 3D reconstruction sequence of a sequence of a plurality of 2D projection images $\vec{p} = \{p(t_o), p(t_M)\}$ of an object imaged in time $t_o$ with contrast product and in time $t_M$ without contrast product, said sequence of pluralities of 2D projection images $\vec{p}$ being obtained by way of a medical imaging system.

The prior art notes that:

- there are reconstruction algorithms for generating compressedapproximations of a 3D image of an object. These reconstructions are made by minimising a criterion of the form $\vec{g}^*(\lambda) = \arg\min_{\vec{g}}\{\lambda S(\vec{g}) + Q(\vec{g})\}$, where $\vec{g} = \{g(t_o), g(t_M)\}$ is a sequence of 3D image(s), $Q(\vec{g})$ models the relationships between the solution and measurements, $S(\vec{g})$ imposes the type of compressibility of the estimated solution, whereas the degree of compressibility is fixed a priori as proportional to the scalar λ.

-

  there are time transforms $H_t$ for the decomposition of a series of two 3D images g according to $\vec{h} = H_t\vec{g}$, with $\vec{h} = \{h_\alpha, h_\delta\}$ series of two 3D images, such that the compressibility restriction can be applied to $\vec{h}$ by $\Phi_{xyz}$ according to $\Phi_{xyz} H_t \vec{g} = \{\Phi_\alpha h_\alpha, \Phi_\delta h_\delta\}$ with $\Phi_\alpha$ (respectively $\Phi_\delta$) a spatial compression transform of the constituent $h_\alpha$ (respectively $h_\delta$) of $\vec{h}$.

To achieve this aim, the invention is based on the following hypotheses:

- The variations introduced by injection of the contrast product into the vascular network are compressible, either because they are limited spatially (for example to vascular tree), or because of simple structure (for example constant by pieces for diffused contrast in the tissue).

- A corollary hypothesis is that the parts not affected by injection of the contrast product are redundant and must be reconstructed from the set of available data.

- The time formulation of acquisition with and without contrast product defines a time transform $H_t$ from which to apply a spatial compression restriction ($\Phi_{xyz}$ of the constituents of the time transform. The type of spatial compression (transform in wavelets, gradient, identity,...) is defined independently for each constituent (for example gradient for one and identity for the other). In particular, one of the constituents cannot be compressible, and the transform which it is associated with is then zero.

Therefore, a first aspect of the invention is a method for processing a sequence of a plurality of 2D projection images of an object of interest, acquired by means of a medical imaging system comprising a source of X-rays, the source being adapted to shift around the object, the method comprising the following steps:

-

  obtaining $N_M$ 2D projection images $p_M = \{p_1(t_M), ..., p_{N_M}(t_M)\}$ of the object of interest according to a plurality of angulations $\{\alpha_{M,1}, ..., \alpha_{M,N_M}\}$ whereas the object is without injection of contrast product, a state defining *time*

$t_M$, and of $N_o$ 2D projection images $p_o = \{p_1(t_o),...., p_{No}(t_o)\}$ of the object of interest according to a plurality of angulations $\{\alpha_{o,1},....., \alpha_{o,No}\}$ whereas the object is opacified by injection of contrast product, a state defining time $t_o$, the 2D projection images being such that $R_o f_o = p_o$ and $R_M f_M = p_M$ *where* $f_o$ and $f_M$ are respectively the 3D image of the object at times $t_o$ and $t_M$, and $R_o$ and $R_M$ are respectively projection operators which model acquisition by the imaging system for the time $t_o$ and $t_M$;

- iterative treatment of the projection images $p_o$ and $p_M$ by minimising relatively to a sequence of 3D image(s) g = {g $(t_o)$, $g(t_M)$} of the functional:

$$J(\vec{g}, \lambda) = \lambda S(\vec{g}) + Q(\vec{g})$$

where

- $Q(\vec{g})$ is a term of fidelity to the measurements acquired;

-

$S(\vec{g}) = \left\| \Phi_{xyz} H_t \vec{g} \right\|_1$ is a restriction where $H_t$ is a decomposition time such that $\vec{h} = H_t \vec{g}$ with $\vec{h} = \{h_\alpha, h_\delta\}$

combination of both constituents of $\vec{g}$ and where $\Phi_{xyz} \vec{h} = \{\Phi_\alpha h_\alpha, \Phi_\delta h_\delta\}$ defines two spatial compression transforms of the two constituents of $\vec{h}$, restriction which will improve determining variations associated with injection, variations supposed to be compressible, and select parts common to both images $g(t_o)$ and $g(t_M)$ which will be determined at the same time from images $p_o$ and images $p_M$;

-

$\lambda$ is a compressibility parameter; the solution of minimising being a set of 3D image(s) $\vec{g}^* = \{g^*(t_o), g^*(t_M)\}$

estimated as $\vec{f} = \{f_o, f_M\}$.

Other aspects of the method according to the first aspect of the invention are the following:

-

The minimising consists of defining a decreasing series of degrees of compressibility $\Lambda = \{\lambda_1,...,\lambda_\Xi\}$ such as

$\lambda_1 > ... > \lambda_\Xi \geq 0$ for which the estimation $\vec{g}^*(\Lambda, \vec{g}^0)$ of $\vec{f} = \{f_o, f_M\}$ is determined from an initial sequence

$\vec{g}^0$ according to:

$$\begin{cases} \vec{g}^0, \Lambda = \{\lambda_1,...,\lambda_\Xi\} \quad \text{donnés} \\ \vec{g}(\lambda_1) = A_{\lambda_1}^\kappa [\vec{g}^0] \\ \vec{g}(\lambda_\xi) = A_{\lambda_\xi}^\kappa [\vec{g}(\lambda_{\xi-1})] \quad \forall \xi \in \{2,...,\Xi\} \\ \vec{g}^*(\Lambda, \vec{g}^0) = \vec{g}(\lambda_\Xi) \end{cases}$$

where $A_\lambda$ is the iteration of an algorithm permitting the minimising of $J(\vec{g}, \lambda)$ relatively to $\vec{g}$ for λ fixed and $A_\lambda^\kappa \left[ \vec{k} \right]$ is the sequence of 3D images resulting from the application of κ iterations of the algorithm $A_\lambda$ to a sequence of 3D images $k$ ;

- time decomposition $H_t$ is the Haar transform defined by $h_\alpha = g(t_o) + g(t_M)$ and $h_\delta = g(t_o) - g(t_M)$ ;

-

$\Phi_{xyz}$ is such that $\Phi_{xyz} H_t \vec{g} = \{0, h_\delta\}$ such that $S(\vec{g}) = \|h_\delta\|_1$ ;

-

$\Phi_{xyz}$ is such that $\Phi_{xyz} H_t \vec{g} = \{\mu \nabla h_\alpha, \nabla h_\delta\}$ where $\nabla h_\alpha$ and $\nabla h_\delta$ are respectively gradients of $h_\alpha$ and $h_\delta$, such that $S(\vec{g}) = \mu \|\nabla h_\alpha\|_1 + \|\nabla h_\delta\|_1$ with $\mu \geq 0$;

-

the initial sequence $\vec{g}^0$ is a zero sequence;

- the pluralities of acquisitions $\{\alpha_{M,1},...,\alpha_{M,N\mu}\}$ and $\{\alpha_{0,1},...,\alpha_{0,No}\}$ contain two sub-assemblies of $N$ angles each $\{\beta_{M,1},...,\beta_{M,N}\} \subset \{\alpha_{M,1},...,\alpha_{M,N_u}\}$ and $\{\beta_{o,1},...,\beta_{o,N}\} \subset \{\alpha_{o,1},...,\alpha_{o,No}\}$ corresponding to two rotations of angular pitch $\Delta\theta$ offset by an angle $0 < \varphi < \Delta\theta$, or: $\forall i \in \{1,...,N\}$ $\beta_{M,i} = i\Delta\theta$ $|\beta_{M,i} - \beta_{o,i}| = \varphi$;

- angular offset $\varphi$ is equal to the semi-pitch sampling, or $\varphi = \Delta\theta/2$.

A second aspect of the invention is a medical imaging system comprising: an acquisition system comprising a source of radiation, a sensor, for the acquisition of a plurality of 2D projection images of an object; storage means of the 2D projection images acquired; a system for the treatment of the 2D projection images acquired designed to utilise a method according to the first aspect of the invention.

A third aspect of the invention is a computer program product comprising programming code instructions for executing steps of the method according to the first aspect of the invention.

Presentation of Figures

Other characteristics and advantages of the invention will emerge from the following description which is purely illustrative and non-limiting and must be considered in conjunction with the attached diagrams, in which, apart from Figure 1 already discussed:

- Figure 2 schematically illustrates a medical imaging system according to the invention;

- Figure 3 is a block diagram of the process of the invention;

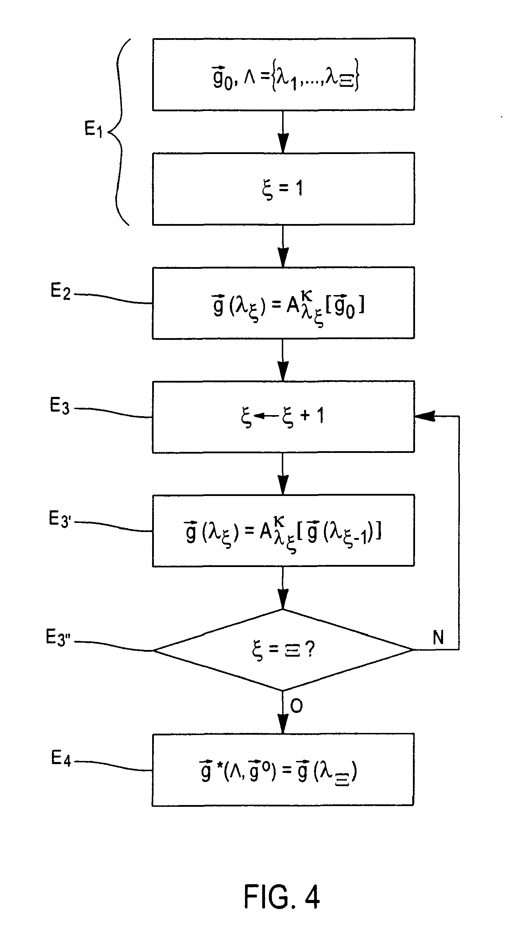

- Figure 4 schematically illustrates steps of the process of the invention.

Detailed Description of the Invention

Medical imaging system

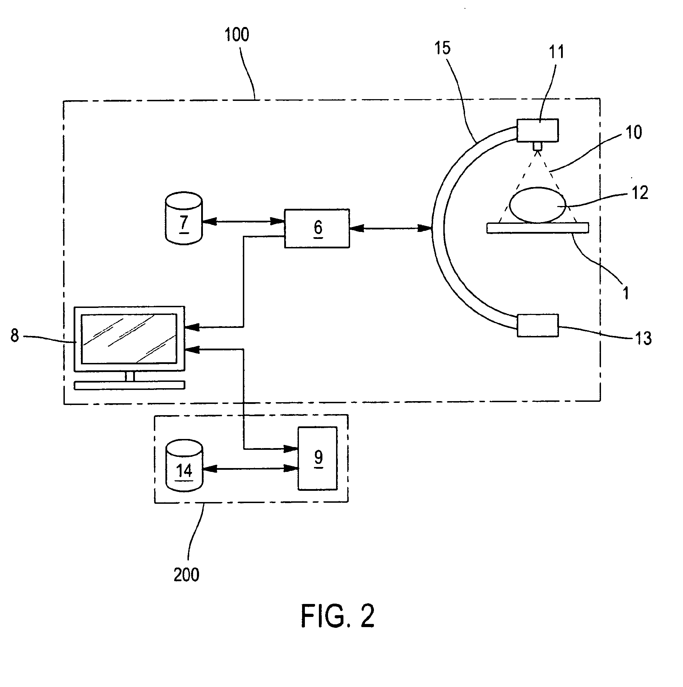

Figure 2 schematically illustrates a medical imaging system 100 for the acquisition of 2D projection images for the reconstruction of a 3D image of an organ. Such a system is used especially for the detection and characterisation of stenoses in vessels.

The medical imaging system 100 comprises a support 1 for receiving a patient 12 to be examined, a source 11 designed to emit a beam 10 of X-rays, a detector 13 arranged opposite the source 11 and configured to detect the X-rays emitted by the source 11, a control unit 6, a storage unit 7 and a display unit 8.

The source 11 of X-rays and the detector 13 are connected for example by means of an arch 15.

The detector 13 can be a semi-conductor image sensor comprising for example caesium phosphorous iodide (scintillater) on a matrix of transistor/photodiode of amorphous silicon. Other adequate detectors are: a CCD sensor, a direct digital detector which directly converts X-rays into digital signals. The detector 13 illustrated in Figure 2 is planar and defines a flat image surface, while other geometries can naturally be suitable.

The control unit 6 controls the acquisition by fixing several parameters such as the dose of radiation to be emitted by the X-ray source and the positioning of the source 11 and of the detector 13. It is connected to the arch 15 by wire or wireless connection.

The control unit 6 can comprise a reading device (not shown), for example a disc reader, a CD-ROM, DVD-ROM reader, or connection ports for reading the instructions of the process for treating an instruction medium (not shown), such as a diskette, a CD-ROM, DVD-ROM, or USB flash drive or more generally by any removable memory medium or even via a network connection.

The storage unit 7 is connected to the control unit 6 for recording parameters and acquired images. It is possible to ensure that the storage unit 7 is located inside the control unit 6 or outside it.

The storage unit 7 can be formed by a hard drive or SSD, or any other removable and rewritable storage means (USB flash drives, memory cards etc.). The storage unit 7 can be ROM/RAM memory of the control unit 6, a USB flash drive, a memory card, central server memory.

The display unit 8 is connected to the control unit 6 for displaying the acquired images and/or information on the acquisition control parameters.

The display unit 8 can be for example a computer screen, a monitor, a flat screen, plasma screen or any type of display device of known type.

Such a display unit 8 allows a practitioner to control reconstruction and/or display of the 2D images acquired.

The medical imaging system 100 is coupled to a processing system 200. The processing system 200 comprises a calculation unit 9 and storage unit 10.

The processing system 200 receives the images acquired and stored in the unit memory 4 of the medical imaging system 100 from which it makes a certain number of treatments (see hereinafter), for example reconstruction of a 3D image from 2D images.

Transmission of data from the storage unit 4 of the medical imaging system 100 to the calculation unit 9 of the processing system 200 can be done over an internal or external information network or by means of any adequate physical memory medium such as diskettes, CD-ROM, DVD-ROM, external hard drive, USB flash drive, SD card, etc.

The calculation unit 9 is for example a computer or computers, a processor or processors, a microcontroller or microcontrollers, a microcomputer or microcomputers, a programmable automaton or automatons, a specific application integrated circuit or circuits, other programmable circuits, or other devices including a computer such as a workstation.

By way of variant, the calculator 9 can comprise a reading device (not shown), for example a disc reader, a CD-ROM, DVD-ROM reader, or connection ports for reading the instructions of the process for treating an instruction medium (not shown), such as a diskette, a CD-ROM, DVD-ROM, or USB flash drive or more generally by any removable memory medium or even via a network connection.

Also, the processing system comprises a storage unit 14 for storing data generated by the calculation unit 9.

The calculation unit 9 can be connected to the display unit 8 (as in Figure 2) or else to another display unit (not shown).

Description of the Method

The image processing method is for example implemented in the treatment unit 200 of the medical imaging system illustrated in Figure 2.

The image processing method reconstructs a sequence of two 3D images $\vec{f} = \{f(t_o), f(t_M)\}$ representing an object with two different times: one, noted $t_o$, with injection of contrast, the other, noted $t_M$, without, giving $t_o > t_M$ or $t_o < t_M$.

For each time, there is a set of images of 2D projections $p(t_n)$ with $t_n$ element of $\{t_o, t_M\}$, obtained by means of the medical imaging system moving according to a trajectory about the object in motion (commonly rotation, also known as spin). This trajectory can be different according to the time in question.

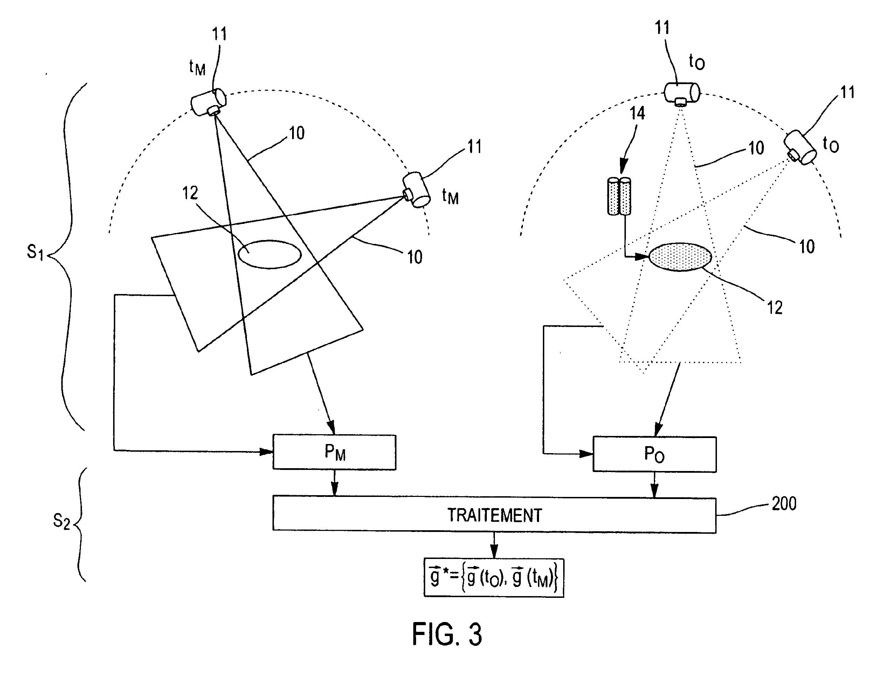

Figure 3 shows the acquisition of sets of 2D projection images $\vec{p} = \{p(t_o), p(t_M)\}$ of the object 12 with and without contrast product. In Figure 3, the greyed object corresponds to the object in which a contrast product was injected by means of an injection device 14 of contrast product.

The sets of 2D projection images $\vec{p}$ are for example previously acquired and recovered from the storage unit 14 of the processing unit 200 of the medical imaging system 100 and treatment of 2D projection images is carried out in the calculator 9 of the processing unit 200 of the medical imaging system.

Each plurality of sequences of 2D projection images $p(t_n)$ is such that $R(t_n)f(t_n) = p(t_n)$. $R = diag\{R(t_n)\}$ for $t_n \in \{t_o, t_M\}$ is the projection operator, diagonal by block, which models sampling conducted by the medical imaging system during acquisition with and without contrast product. It verifies $R\vec{f} = \vec{p}$.

In current practice, the choice $R(t_o) = R(t_M)$ is privileged, for lack of adequate reconstruction. The reconstructed 3D images are affected by sub-sampling striae. The aim of the invention is to propose a reconstruction method where sub-sampling can be compensated by *a priori* mathematics which makes it an advantage to have $R(t_o) \neq R(t_M)$ and thus increases the contrast resolution of all reconstructions.

For each time $t_n \in \{t_o, t_M\}$ of the object, the functional of the least squares following are defined:

$$Q(g, t_n) = \frac{1}{2} \left\| R(t_n)g - p(t_n) \right\|_2^2$$

where $\| \ \|_2$ symbolises the Euclidian standard known as $L_2$ and $g$ a 3D image. The composite functional associated with for $g = \{g(t_o), g(t_M)\}$ is defined:

$$Q(\vec{g}) = Q(g(t_o), t_o) + Q(g(t_M), t_M) = \frac{1}{2} \left\| R\vec{g} - \vec{p} \right\|_2^2.$$

The minimising relative to $\vec{g}$ of $Q(\vec{g})$ ) reconstructs a sequence of 3D images $\vec{g}^{\bullet} = \left\{ g^{\bullet}(t_o), g^{\bullet}(t_M) \right\}$ of the object with and without contrast product, where the 3D image $\vec{g}^*(t_o)$ is however considerably degraded by the reduced number of projection images contained in the sequence of images $p(t_o)$. The image $g^*(t_M)$ is also degraded if the number of 2D projections of $p(t_M)$ is the same as for $p(t_o)$, as is the case in common practice which minimises the total dose of examination.

The document [Riddell C, Savi A, Gilardi MC, Fazio F, "Frequency weighted least squares reconstruction of truncated transmission SPECT data. " IEEE Trans. Nucl. Sci. 43(4):2292-8*]* and [Thibault JB, Sauer KD, Bouman CA, Hsieh J., "A three-dimensional statistical approach to improved image quality for multi-slice helical CT. " Med Phys. 34 (11):4526-44*]* contains for example functionals of least weighted squares alternative to the definition of $Q(g, t_n)$ herein-above.

A restriction of parsimony is also defined

$$S(\vec{g}) = \left\| \Phi_{xyz} H_t \vec{g} \right\|_1$$

where $\| \ \|_1$, symbolises the standard known as $L_1$ and $H_t$ is a decomposition time such that $\vec{h} = H_t \vec{g}$ with $\vec{h} = \left\{ h_{\alpha}, h_{\delta} \right\}$ and $\Phi_{xyz}$ is a transform such that $\Phi_{xyz} \vec{h} = \left\{ \Phi_{\alpha} h_{\alpha}, \Phi_{\delta} h_{\delta} \right\}$ with $\Phi_{\alpha}$ (respectively $\Phi_{\delta}$) transform enabling spatial compression of the 3D image constituent $h_{\alpha}$ (respectively $h_{\delta}$) of $\vec{h}$. The type of spatial compression transform (transform in wavelets, gradient, identity,...) is defined independently for each constituent according to the hypotheses of compressibility which can be done on each of the constituents. In particular, if one of the constituents is not compressible, the transform which is associated with it is zero ($\Phi_\alpha$ or $\Phi_\delta$ is zero).

The corollary of the compressibility hypothesis linked to injection is a redundancy hypothesis of the information not affected by injection. The aim of decomposition $H_t$ is to combine the mask and opacified 3D images so that the redundant parts, in other words the parts not affected by the contrast product and therefore common to the two images, are determined from the information available at the same time in $p(t_M)$ and $p(t_O)$.

Integration of measurements and of the compressibility hypothesis is done by defining the functional:

$$J(\vec{g},\lambda) = \lambda S(\vec{g}) + Q(\vec{g}).$$

A step of the treatment process consists of determining a sequence of images $\vec{g}^*(\lambda) = \{g^*(t_o,\lambda), g^*(t_M,\lambda)\}$ which minimise the functional $J(\vec{g},\lambda)$ relative to $\vec{g}$ for $\lambda$ fixed and gives an estimation of $\vec{f} = \{f(t_o), f(t_M)\}$, solution of the problem of perfectly sampled tomographic reconstruction. The estimation $\vec{g}^*(\lambda)$ is such that the set of restrictions is verified: variations due to injection are determined by the data obtained at the time $t_o$ only, the redundant parts are determined from times $t_o$ and $t_M$, and the missing parts from the compressibility hypothesis.

An iterative convex optimisation algorithm for minimising $J(\vec{g},\lambda)$ is known, for example one of those described or referenced in [Afonso MV, Bioucas-Dias JM, Figueiredo MA., "Fast image recovery using variable splitting and constrained optimization." IEEE Trans Image Process. (9): 2345-56] and [Beck A, Teboulle M. "Fast gradient-based algorithms for constrained total variation image denoising and deblurring problems." IEEE Trans. Image Process. 18(11): 2419-34].

We note $A_\lambda$ the iteration for minimising of $J(\vec{g},\lambda)$ relative to $\vec{g}$ for $\lambda$ fixed and $A_\lambda^\kappa[\vec{g}]$ the sequence of 3D images results from the application of $\kappa$ iterations of the algorithm to the sequence of 3D images $\vec{g}$. For $\vec{g}^0$ fixed, for example a zero sequence, the algorithm is such that

$$\lim_{\kappa \to \infty} A_\lambda^\kappa(\vec{g}^0) = \arg\min_{\vec{g}} J(\vec{g},\lambda)$$

and in particular such that $A_\lambda^\kappa(\vec{g}^0) \approx \arg\min_{\vec{g}} J(\vec{g},\lambda)$ for $\kappa$ finished and sufficiently small.

Current practice is fixing *a priori* an optimal value $\lambda^*$ of $\lambda$. This additional knowledge can be circumvented by a process of degressive restriction, that is, by definition of a decreasing sequence of degrees of compressibility $\Lambda = \{\lambda_1,...,\lambda_\Xi\}$ such that $\lambda_1 > ... > \lambda_\Xi \geq 0$ for which $\vec{g}^0$ an estimation $\vec{g}^*(\Lambda,\vec{g}^0)$ of $\vec{f}$ solution of the problem of perfectly sampled tomographic reconstruction is determined from the arbitrary sequence, according to:

$$\begin{cases} \vec{g}^0, \Lambda = \{\lambda_1,...,\lambda_\Xi\} & \text{donnés} \\ \vec{g}(\lambda_1) = A_{\lambda_1}^\kappa[\vec{g}^0] \\ \vec{g}(\lambda_\xi) = A_{\lambda_\xi}^\kappa[\vec{g}(\lambda_{\xi-1})] & \forall \xi \in \{2,...,\Xi\} \\ \vec{g}^*(\Lambda,\vec{g}^0) = \vec{g}(\lambda_\Xi) \end{cases}$$

To explain the unfolding of the process for obtaining $\vec{g}^*\left(\Lambda, \vec{g}^0\right)$ which is the approximate solution to the problem, $E_1$, $\vec{g}^0$ and A are fixed. $E_2$, the sequence $\vec{g}\left(\lambda_1\right) = A_{\lambda_1}^\kappa\left[\vec{g}^0\right]$ is determined which is the sequence minimising the unctional $J(\vec{g}, \lambda_1)$ relatively to $\vec{g}$ for $\lambda_1$ fixed starting out from $\vec{g}^0$.

Next, $\vec{g}\left(\lambda_\xi\right) = A_{\lambda_\xi}^\kappa\left[\vec{g}\left(\lambda_{\xi-1}\right)\right]$ $\forall \xi \in \{2,...,\Xi\}$ is determined iteratively $E_3$, $E_3'$, $E_3''$ which corresponds to the sequence $\vec{g}\left(\lambda_\xi\right)$ minimising the functional $J(\vec{g}, \lambda_\xi)$ relative to g for $\lambda_\xi$ fixed starting out from $\vec{g}\left(\lambda_{\xi-1}\right)$, resulting in $E_4$, $\vec{g}^*\left(\Lambda, \vec{g}^0\right)$ the approximate solution to the problem of tomographic reconstruction. The numbers of the steps do not correspond to the diagram which is itself erroneous: the arrow must return to step E3.

The number of approximations $\Xi$ and the number of iterations by approximation $\kappa$ are fixed such that they form the best compromise between the quality of $\vec{g}^*\left(\Lambda, \vec{g}^0\right)$ and the calculation time necessary for generation of $\vec{g}^*\left(\Lambda, \vec{g}^0\right)$ which are both proportional to $\Xi$ and $\kappa$.

As a variant, the number of iterations $\kappa$ is advantageously selected depending on the degree of compressibility $\lambda_\xi$ and inversely proportional to the latter.

The sequence of 3D images $\vec{g}^*\left(\Lambda, \vec{g}^0\right)$ therefore represents reconstruction of the object at times $t_M$ and $t_o$, that is, with and without injection of contrast.

Transforms and algorithms illustrating the invention as described are explained. The minimising iteration $A_\lambda$ of

$$J(\vec{g}, \lambda) = \lambda S(\vec{g}) + Q(\vec{g})$$ can be written as: $A_\lambda[\vec{g}] = proxS_{\tau=\rho\lambda}\left[\vec{g} - \rho\nabla Q(\vec{g})\right]$

where: $\nabla Q(\vec{g})$ is the gradient of $Q(\vec{g})$ $\rho$ is a scalar such as $\rho\|\nabla Q(\vec{g})\| < 1$ $\forall\vec{g}$ and

$$proxS_{\tau=\rho\lambda}[\vec{g}] = \arg\min_{\vec{k}}\left\{\|\vec{k} - \vec{g}\|_2^2 + \tau\|S(\vec{k})\|_1\right\}$$ is the proximal operator for applying the parsimony restriction.

In addition, if $H_t$ is defined by the Haar transform itself defined by $h_\alpha = g(t_o) + g(t_M)$ and $h_\delta = g(t_o) - g(t_M)$, *it is clear that* $h_\delta$ is the subtracted 3D image. If the hypothesis is made that $h_\delta$ contains only contrast vessels, $h_\delta$ is naturally parsimonious and $\Phi_{xyz}$ can be defined such that $\Phi_{xyz}H_t\vec{g} = \{0, h_s\}$ and $S(\vec{g}) = \|h_s\|_1$. This gives

$proxS_\tau[\vec{g}] = H_t^{-1}\{h_\alpha, T_\tau h_\delta\}$ where $T_\tau$ is a operator of soft thresholding of threshold $\tau$ which inserts in between the Haar transform $H_t$ and its inverse $H_t^{-1}$.

Alternatively, $\Phi_{xyz}H_t\vec{g} = \{\mu|\nabla h_\alpha|, |\nabla h_\delta|\}$ can be defined where V represents the gradient of a 3D image, such that $S(\vec{g}) = \mu\|\nabla h_\alpha\|_1 + \|\nabla h_\delta\|_1$. This restriction, known as total variation, is applied to each of the constituents of $\vec{h}$. This gives $proxS_\tau[\vec{g}] = H_t^{-1}\{F_{\tau\mu}h_\alpha, F_\tau h_\delta\}$ where $F_\tau$ and $F_{\tau\mu}$ are the filters of total parameter variation rand $\tau\mu$ respectively with $\mu$ real positive or zero which modulates the force of total variation following the constituent of $\vec{h}$. The restriction therefore returns to filter each constituent of the Haar transform with a filter of total variation of different force. Since the degree of parsimony of $h_\alpha$, an image containing the mask, is supposed to be smaller than the degree of parsimony of $h_\delta$, an image of vessels, this results in $0 \leq \mu < 1$.

These two choices are valid irrespectively of the definitions of $R(t_n)$. However, if $R(t_M)$ samples a circular trajectory with an angular pitch $\delta\theta$, and if $R(t_O)$ samples a circular trajectory with the same angular pitch $\delta\theta$, it is advantageous with this invention to take $R(t_M) \neq R(t_O)$ and offsets of $\delta\theta/2$ so that the operator $R = diag\{R(t_O), R(t_M)\}$ corresponds to a sampling of a circular trajectory with an angular pitch of $\delta\theta/2$. This choice doubles the angular sampling for the same total number of projections (and therefore the same dose of X-rays) relative to the current common case where $R = R$ $(t_M) = R(t_O)$. More generally, if $\left\{\alpha_{M,1},...,\alpha_{M,N_M}\right\}$ the set of $N_M$ angulations contained in $R(t_M)$ and $\{\alpha_{o,1},...,\alpha_{o,No}\}$ the set of $N_O$ angulations contained in $R(t_O)$ are noted, these sets are selected such that there are two sub-assemblies of $N$ angles $\{\beta_{M,1},...,\beta_{M,N}\} \subset \{\alpha_{M,1},...,\alpha_{M,NM}\}$ and $\{\beta_{0,1},...,\beta_{0,N}\} \subset \{\alpha_{0,1},...,\alpha_{0,N0}\}$ defining two rotations of angular pitch $\Delta\theta$ offset by an angle $0 < \varphi < \Delta\theta$, or: $\forall i \in \{1,..., N\}$ $\beta_{M,i} = i\Delta\theta$ $|\beta_{M,i} - \beta_{0,i}| = \varphi$.

Computer program

The treatment process of radiological images can be advantageously implemented as a computer program comprising machine instructions for executing the process.

**Claims**

1. A method for processing a sequence of a plurality of 2D projection images of an object of interest, acquired by means of a medical imaging system comprising a source of X-rays, the source being adapted to move around the object, the method comprising the following steps:

   - obtaining (S1) $N_M$ 2D projection images $p_M = \{p_1(t_M),...,p_{N_M}(t_M)\}$ of the object of interest according to a plurality of angulations $\{\alpha_{M,1},...,\alpha_{M,N_M}\}$ whereas the object is without injection of contrast product, a status defining the *time $t_M$*, and of $N_O$ 2D projection images $p_O = \{p_1(t_O),...,p_{N_O}(t_O)\}$ of the object of interest according to a plurality of angulations $\{\alpha_{O,1},...,\alpha_{O,N_O}\}$ whereas the object is opacified by injection of contrast product, a status defming the time $t_O$, the 2D projection images being such that $R_O f_O = p_O$ and $R_M f_M = p_M$ where $f_O$ and $f_M$ are respectively the 3D image of the object at times $t_O$ and $t_M$, and $R_O$ and $R_M$ are respectively projection operators which model acquisition by the imaging system for the time $t_O$ and $t_M$ ;
   - iterative treatment (S2) of the projection images $p_O$ and $p_M$ by minimising relative to a sequence of 3D images $\overleftrightarrow{g} = \{g(t_O), g(t_M)\}$ of the functional:

$$J(\vec{g},\lambda) = \lambda S(\vec{g}) + Q(\vec{g})$$

   where

   - $Q(\overleftrightarrow{g})$ is a term of fidelity to the measurements acquired;
   - $S(g) = \|\Phi_{xyz}H_t\overleftrightarrow{g}\|_1$ is a restriction where $H_t$ is a decomposition time such that $\overleftrightarrow{h} = H_t\overleftrightarrow{g}$ with $\overleftrightarrow{h} = \{h_\alpha, h_\delta\}$ combination of the two constituents of $\overleftrightarrow{g}$ and where $\Phi_{xyz}\overleftrightarrow{h} = \{\Phi_\alpha h_\alpha, \Phi_\delta h_\delta\}$ defines two spatial transforms of compression of both constituents of $\overleftrightarrow{h}$, restriction, which will improve the determining of variations linked to the injection, supposedly compressible variations, and select parts common to both images $g(t_O)$ and $g(t_M)$ which will be determined at the same time from images $p_O$ and images $p_M$ ;
   - $\lambda$ is a parameter of compressibility;

   the minimising solution being a set of 3D images $\overleftrightarrow{g}^* = \{g^*(t_O), g^*(t_M)\}$ estimated from $\overleftrightarrow{f} = \{f_O, f_M\}$.

2. The method as claimed in claim 1, in which minimising consists of defining a decreasing sequence of degrees of compressibility $\Lambda = \{\lambda_1,...,\lambda_\Xi\}$ such as $\lambda_1 > ... > \lambda_\Xi \geq 0$ for which the estimation $\overleftrightarrow{g}^*(\Lambda, \overleftrightarrow{g}^0)$ of $\overleftrightarrow{f} = \{f_O, f_M\}$ is determined from an initial sequence $\overleftrightarrow{g}^0$ according to:

$$\begin{cases} \vec{g}^{\,0}, \Lambda = \{\lambda_1,...,\lambda_\Xi\} & \text{donnés} \\ \vec{g}(\lambda_1) = A_{\lambda_1}^{\kappa}\left[\vec{g}^{\,0}\right] \\ \vec{g}(\lambda_\xi) = A_{\lambda_\xi}^{\kappa}\left[\vec{g}(\lambda_{\xi-1})\right] & \forall \xi \in \{2,...,\Xi\} \\ \vec{g}^{*}(\Lambda,\vec{g}^{\,0}) = \vec{g}(\lambda_\Xi) \end{cases}$$

where $A_\lambda$ is the iteration of an algorithm for the minimising of $J(\vec{g}, \lambda)$ relative to $\vec{g}$ for $\lambda$ fixed and $A_{\lambda}^{\kappa}\left[\vec{h}\right]$ is the sequence of 3D images resulting from the application of $\kappa$ iterations of the algorithm $A_\lambda$ to a sequence of 3D images $\vec{h}$.

3. The method as claimed in any one of the preceding claims, in which $H_t$ is the Haar transform defmed by $h_\alpha = g(t_O) + g(t_M)$ and $h_\delta = g(t_O)-g(t_M)$.

4. The method as claimed in any one of the preceding claims, in which $\Phi_{xyz}$= is such that $\Phi_{xyz}H_t\vec{g} = \{0,h_\delta\}$ such that $S(g)=\|h_\delta\|_1$.

5. The method as claimed in any one of the preceding claims, in which $\Phi_{xyz}$ is such that $\Phi_{xyz}H_t\vec{g} = \{\mu\nabla h_\alpha, \nabla h_\delta\}$ where $\nabla h_\alpha$ and $\nabla h_\delta$ are respectively the gradients of $h_\alpha$ and $h_\delta$, such that $S(g) = \mu\|\nabla h\alpha\|_1 + \|\nabla h_\delta\|_1$ with $\mu \geq 0$.

6. The method as claimed in any one of the preceding claims, in which the initial sequence $\overline{g}^0$ is a zero sequence.

7. The method as claimed in any one of the preceding claims, in which the pluralities of acquisitions $\{\alpha_{M,1}...\alpha_{M,N_M}\}$ and $\{\alpha_{O,1}...\alpha_{O,N_O}\}$ contain two subassemblies of $N$ angles each $\{\beta_{M,1}...\beta_{M,N}\} \subset \{\alpha_{M,1},....,\alpha_{M,N_M}\}$ and $\{\beta_{O,1},...,\beta_{O,N}\} \subset \{\alpha_{O,1},...,\alpha_{O,N_O}\}$ corresponding to two rotations of angular pitch $\Delta\theta$ offset by an angle $0<\varphi<\Delta\theta$, or: $\forall i \in \{1,...,N\}$ $\beta_{M,i} = i\Delta\theta$ $|\beta_{M,i} - \beta_{O,i}| = \varphi$.

8. The method as claimed in any one of the preceding claims, in which the angular offset $\varphi$ is equal to the semi-pas of sampling, or $\varphi = \Delta\theta/2$.

9. A medical imaging system comprising:

   - an acquisition unit comprising a source of radiation, a sensor for the acquisition of a plurality of 2D projection images of an object;
   - a processing unit of acquired 2D projection images for executing a method as claimed in any one of the preceding claims.

10. A computer program product comprising program code instructions which cause a computer to execute the steps of the method as claimed in any one of claims 1 to 7.

**Patentansprüche**

1. Verfahren zum Verarbeiten einer Sequenz mehrerer 2D-Projektionsbilder eines interessierenden Objektes, die durch ein medizinisches Bildgebungssystem erfasst wurden, das eine Röntgenstrahlungsquelle aufweist, wobei die Quelle dafür angepasst ist, sich um das Objekt herum zu bewegen, und das Verfahren die nachstehenden Schritte aufweist:

   Gewinnen (S1) von $N_M$ 2D-Projektionsbildern $p_M=\{p_1(t_M),...,p_{N_M}(t_M)\}$ des interessierenden Objektes gemäß mehreren Winkelstellungen $\{\alpha_{M,1},...,\alpha_{M.N_M}\}$, wobei das Objekt ohne Injektion eines Kontrastproduktes ist, eines den Zeitpunk $t_M$ bestimmenden Status, und von $N_0$ 2D-Proj$p_0=\{p_1(t_0),...p_{N_o}(t_0)\}$ des interessierenden Objektes gemäß mehreren $V\{\alpha_{0,1},....\alpha_{0,N},\}$llungen, während das Objekt durch die Injektion eines Kontrastproduktes verschattet ist, eines den Zeitpunkt $T_0$ definierenden Status, wobei die 2D-Projektionsbilder so sind, dass $R_0f_0 = p_0$ und $R_Mf_M = p_m$ ist, wobei $f_0$ und $f_m$ jeweils das 3D-Bild des Objektes zu Zeitpunkten $t_0$ und $t_M$ sind und $R_0$

EP 2 469 471 B1

und $R_M$ jeweils Projektionsoperatoren sind, welche die Erfassung durch das Bildgebungssystem für den Zeitpunkt $t_0$ und $t_m$ modellieren;

iterative Behandlung (S2) der Projektionsbilder $p_0$ und $p_m$ durch Minimierung in Bezug auf eine Sequenz von 3D-Bildern $\bar{g}=\{g(t_O),g(t_M)\}$ der Funktionalität:

$$J(\vec{g},\lambda) = \lambda S(\bar{g}) + Q(\bar{g})$$

wobei:

- $Q(\bar{g})$ ein Vertrauensterm der erfassten Messwerte ist;
- $S(g) =\|\Phi_{mz}H_t g\|_1$ eine Einschränkung ist, wobei $H_t$ eine zerlegungszeit dergestalt ist, dass $\overset{\leftrightarrow}{h}=H_t\overset{\leftrightarrow}{g}$ mit $\overset{\leftrightarrow}{h}=\{h_\alpha,h_\delta\}$ eine Kombination der zwei Bestandteile von $g$ ist, und wobei $\Phi_{xyz}h=\{\Phi_\alpha h_\alpha,\Phi_\delta h_\delta\}$ zwei räumliche Kompressionstransformationen beider Bestat $h$ teile von definiert, eine Einschränkung, welche die Ermittlung von mit der Injektion verknüpften Variationen verbessert, und für beide Bilder $g(t_0)$ und $(g_m)$ gemeinsame Teile auswählt, welche zu demselben Zeitpunkt aus den Bildern $p_0$ und den Bildern $p_M$ ermittelt werden;
- $\lambda$ ein Kompressibilitätsparameter ist;

wobei die minimierende Lösung ein Satz von 3D-Bildern $\overset{\leftrightarrow}{g}*=\{\overset{\leftrightarrow}{g}(t_O),g*(t_M)\}$ ist, die aus $\bar{f}=\{f_0,f_M\}$ abgeschätzt werden.

2.  Verfahren nach Anspruch 1, in welchem die Minimierung aus einer Definition einer abnehmenden Sequenz von Kompressibilitä $\Lambda=\{\lambda_1,...,\lambda_z\}$ $\lambda_1>...>\lambda_z\geq0$ besteht, für welche der Schät $g*(\Lambda,g^0)$ $\bar{f}=\{f_O,f_M\}$ aus einer Anfang: $g^0$ quenz ermittelt wird, gemäß:

$$\begin{cases} \vec{g}^0, \Lambda = \{\lambda_1,...,\lambda_\Xi\} \quad \text{gegeben} \\ \vec{g}(\lambda_1) = A_{\lambda_1}^\kappa[\vec{g}^0] \\ \vec{g}(\lambda_\xi) = A_{\lambda_\xi}^\kappa[\vec{g}(\lambda_{\xi-1})] \quad \forall\xi\in\{2,...,\Xi\} \\ \vec{g}^*(\Lambda,\vec{g}^0) = \vec{g}(\lambda_\Xi) \end{cases}$$

wobei $A_\lambda$ die Wiederholung eines Algorithmus für die Minimierung von $J(\overset{\leftrightarrow}{g},\lambda)$ in Bezug auf $\overset{\leftrightarrow}{g}$ für ein festes $\lambda$ ist und

$A_\lambda^\kappa[\bar{h}]$ die Sequenz von 3D-Bildern ist, die sich aus der Anwendung von $\kappa$ Iterationen des Algorithmus $A_\lambda$ auf eine Folge von 3D-Bildern ergibt.

3.  Verfahren nach einem der vorstehenden Ansprüche, in $\overset{\leftrightarrow}{h}$ welchem $H_t$ die Haar-Transformation ist, die durch $h_\alpha=g(t_O+g(t_M)$ und $h_g=g(t_O)-g(t_M)$ definiert ist.

4.  Verfahren nach einem der vorstehenden Ansprüche, in welchem $\Phi_{xyz}$ so ist, dass $\Phi_{xyz}H_t\overset{\leftrightarrow}{g}=\{0,h_\delta\}$ so ist, dass $S(\overset{\leftrightarrow}{g})=\|h_\delta\|_1$ ist.

5.  Verfahren nach einem der vorstehenden Ansprüche, in welchem $\Phi_{xyz}$ so ist, dass $\Phi_{xyz}H_t g=\{\mu\nabla h_\alpha, \nabla h_g\}$ ist, wobei $\nabla h_\alpha$ und $\nabla h_\delta$ jeweils die Gradienten von $h_\alpha$ und $h_\delta$ sind, so dass $S(g)=\mu\|\nabla h_\alpha\|+\|\nabla h_\delta\|_1$ mit $\mu\geq0$ ist.

6.  Verfahren nach einem der vorstehenden Ansprüche, in welchem die Anfangssequenz $\overset{\leftrightarrow}{g}^0$ eine Nullsequenz ist.

7.  Verfahren nach einem der vorstehenden Ansprüche, in welchem die mehreren Erfassungen $\{\alpha_{M,1},...,\alpha_{M,NM}\}$ und $\{\alpha_{O,1},...,\alpha_{O,No}\}$ zwei Untererfassungen von $N$ Winkeln von jeweils $\{\beta_{M,1},....\beta_{M,N}\}\subset\{\alpha_{M,1},...\alpha_{M,NM}\}$ und $\{\beta_{O,1},....\beta_{O,N}\}\subset\{\alpha_{O,1}...,\alpha_{O,NM}\}$ enthalten, die zwei Rotationen mit einer Winkelsteigung $\Delta\theta$ versetzt um einen Winkel $0<\varphi<\Delta\theta$ entsprechen, od$\forall i\in\{1,...,N\}$ $\beta_{M,i}=i\Delta\theta$ $|\beta_{M,i}-\beta_{O,i}|=\varphi$ ist.

8.  Verfahren nach einem der vorstehenden Ansprüche, in welchem der Winkelversatz ($\varphi$) gleich einem Halbdurchlauf der Abtastung ist oder $\varphi=\Delta\theta/2$ ist.

9. Medizinisches Bildgebungssystem, aufweisend:

- eine Erfassungseinheit, die eine Strahlungsquelle, und einen Sensor für die Erfassung von mehreren 2D-Projektionsbildern eines Objektes aufweist;
- eine Verarbeitungseinheit für erfasste 2D-Projektionsbilder zum Ausführen eines Verfahrens gemäß einem der vorstehenden Ansprüche.

10. Computerprogrammprodukt mit Programmcodeinstruktionen, welche einen Computer dazu veranlassen, die Schritte des Verfahrens nach einem der Ansprüche 1 - 7 auszuführen.


**Revendications**

1. Procédé de traitement d'une séquence d'une pluralité d'images de projection 2D d'un objet d'intérêt, acquises au moyen d'un système d'imagerie médicale comprenant une source de rayons X, la source étant conçue pour se déplacer autour de l'objet, le procédé comprenant les étapes suivantes :

- obtention (S1) de $N_M$ images de projection 2D $p_M = \{p_1(t_M),...,p_{N_M}(t_M)\}$ de l'objet d'intérêt conformément à une pluralité d'angles $\{\alpha_{M,1},...,\alpha_{M,NM}\}$ pendant que l'objet est sans injection de produit de contraste, un état définissant l'instant $t_M$, et de $N_O$ images de projection 2D $P_O = \{p_1(t_O),...,P_{NO}(t_O)\}$ de l'objet d'intérêt conformément à une pluralité d'angles $\{\alpha_{O,1},...,\alpha_{O,NO}\}$ pendant que l'objet est opacifié par injection de produit de contraste, un état définissant l'instant $t_O$, les images de projection 2D étant telles que $R_O f_O = p_O$ et $R_M f_M = p_M$ où $f_O$ et $f_M$ sont respectivement l'image 3D de l'objet aux instants $t_O$ et $t_M$, et $R_O$ et $R_M$ sont respectivement des opérateurs de projection qui modélisent l'acquisition par le système d'imagerie pour les instants $t_O$ et $t_M$ ; et
- traitement itératif (S2) des images de projection $p_O$ et $p_M$ par minimisation, par rapport à une séquence d'images 3D $\vec{g} = \{g(t_O),g(t_M)\}$, de la fonctionnelle :

$$J(\vec{g}, \lambda) = \lambda S(\vec{g}) + Q(\vec{g})$$

où :

- $Q(\vec{g})$ est un terme de fidélité aux mesures acquises ;
- $S(g) = \|\Phi_{xyz} H_t \vec{g}\|_1$ est une contrainte où $H_t$ est une décomposition telle que $\vec{h} = H_t \vec{g}$, $\vec{h} = \{h_\alpha, h_\delta\}$ étant une combinaison des deux composantes de $\vec{g}$, et où $\Phi_{xyz} \vec{h} = \{\Phi_\alpha h_\alpha, \Phi_\delta h_\delta\}$ définit deux transformations spatiales de compression des deux composantes de $\vec{h}$, contrainte qui améliorera la détermination de variations liées à l'injection, variations supposées compressibles, et sélectionnera des parties communes aux deux images $g(t_O)$ et $g(t_M)$ qui seront déterminées en même temps à partir d'images $p_O$ et d'images $p_M$ ; et
- $\lambda$ est un paramètre de compressibilité ;

la solution minimisante étant un ensemble d'images 3D $\vec{g}^* = \{g^*(t_O),g^*(t_M)\}$ estimées à partir de $\vec{f} = \{f_O, f_M\}$.

2. Procédé selon la revendication 1, dans lequel la minimisation consiste à définir une séquence décroissante de degrés de compressibilité $\Lambda = \{\lambda_1,...,\lambda_\Xi\}$ telle que $\lambda_1 > ... > \lambda_\Xi \geq 0$ pour laquelle l'estimation $g^*(\Lambda,g^0)$ de $\vec{f} = \{f_O,f_M\}$ est déterminée à partir d'une séquence initiale $\vec{g}^0$ conformément à :

$$\begin{cases} \vec{g}^0, \Lambda = \{\lambda_1,...,\lambda_\Xi\} \text{ donnés} \\ \vec{g}(\lambda_1) = A_{\lambda_1}^\kappa \left[\vec{g}^0\right] \\ \vec{g}(\lambda_\xi) = A_{\lambda_\xi}^\kappa \left[\vec{g}(\lambda_{\xi-1})\right], \forall \xi \in \{2,...,\Xi\} \\ \vec{g}^*(\Lambda, \vec{g}^0) = \vec{g}(\lambda_\Xi) \end{cases}$$

où $A_\lambda$ est l'itération d'un algorithme pour la minimisation de $J(\overleftrightarrow{g},\lambda)$ par rapport à $\overleftrightarrow{g}$ pour $\lambda$ fixe et $A_\lambda^\kappa\left[\vec{h}\right]$ est la séquence d'images 3D résultant de l'application de $\kappa$ itérations de l'algorithme $A_\lambda$ à une séquence d'images 3D $\overleftrightarrow{h}$.

3. Procédé selon l'une quelconque des revendications précédentes, dans lequel $H_t$ est la transformation de Haar définie par $h_\alpha=g(t_O)+g(t_M)$ et $h_\delta=g(t_O)-g(t_M)$.

4. Procédé selon l'une quelconque des revendications précédentes, dans lequel $\Phi_{xyz}$ est tel que $\Phi_{xyz}H_t\overleftrightarrow{g}=\{0,h_\delta\}$, de sorte que $S(\overleftrightarrow{g})=\|h_\delta\|_1$.

5. Procédé selon l'une quelconque des revendications précédentes, dans lequel $\Phi_{xyz}$ est tel que $\Phi_{xyz}H_t\overleftrightarrow{g}=(\mu\nabla h_\alpha,\nabla h_\delta\}$, où $\nabla h_\alpha$ et $\nabla h_\delta$ sont respectivement les gradients de $h_\alpha$ et $h_\delta$ de sorte que $S(\overleftrightarrow{g})=\mu\|\nabla h_\alpha\|_1+\|\nabla h_\delta\|_1$ avec $\mu\geq 0$.

6. Procédé selon l'une quelconque des revendications précédentes, dans lequel la séquence initiale $\overleftrightarrow{g}^0$ est une séquence nulle.

7. Procédé selon l'une quelconque des revendications précédentes, dans lequel les pluralités d'acquisitions $\{\alpha_{M,1},...,\alpha_{M,N_M}\}$ et $\{\alpha_{O,1},...,\alpha_{O,N_O}\}$ contiennent deux sous-ensembles de $N$ angles chacun, $\{\beta_{M,1},...,\beta_{M,N}\}\subset\{\alpha_{M,1},...,\alpha_{M,N_M}\}$ et $\{\beta_{O,1},...,\beta_{O,N}\}\subset\{\alpha_{O,1},...,\alpha_{O,N_O}\}$, correspondant à deux rotations de pas angulaire $\Delta\theta$ décalées par un angle $0 < \varphi < \Delta\theta$, soit : $\forall i\in \{1,....N\},\beta_{M,i}=i\Delta\theta$ et $|\beta_{M,i}-\beta_{O,i}|=\varphi$.

8. Procédé selon l'une quelconque des revendications précédentes, dans lequel le décalage angulaire $\varphi$ est égal au demi-pas d'échantillonnage, soit $\varphi = \Delta\theta/2$.

9. Système d'imagerie médicale, comprenant :

   - une unité d'acquisition comprenant une source de rayonnement, un capteur pour l'acquisition d'une pluralité d'images de projection 2D d'un objet ; et
   - une unité de traitement d'images de projection 2D acquises pour exécuter un procédé selon l'une quelconque des revendications précédentes.

10. Produit programme d'ordinateur comprenant des instructions de code de programme qui amènent un ordinateur à exécuter les étapes du procédé selon l'une quelconque des revendications 1 à 7.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090161932 A

**Non-patent literature cited in the description**

- **RIDDELL C ; SAVI A ; GILARDI MC ; FAZIO F.** Frequency weighted least squares reconstruction of truncated transmission SPECT data. *IEEE Trans. Nucl. Sci.,* vol. 43 (4), 2292-8
- **THIBAULT JB ; SAUER KD ; BOUMAN CA ; HSIEH J.** A three-dimensional statistical approach to improved image quality for multi-slice helical CT. *Med Phys.,* vol. 34 (11), 4526-44

- **AFONSO MV ; BIOUCAS-DIAS JM ; FIGUEIREDO MA.** Fast image recovery using variable splitting and constrained optimization. *IEEE Trans Image Process,* 2345-56
- **BECK A ; TEBOULLE M.** Fast gradient-based algorithms for constrained total variation image denoising and deblurring problems. *IEEE Trans. Image Process,* vol. 18 (11), 2419-34